(19) Europäisches Patentamt / European Patent Office / Office européen des brevets

(11) **EP 4 503 802 A1**

(12) **EUROPEAN PATENT APPLICATION**
published in accordance with Art. 153(4) EPC

(43) Date of publication:
**05.02.2025 Bulletin 2025/06**

(21) Application number: **23778515.9**

(22) Date of filing: **31.03.2023**

(51) International Patent Classification (IPC):
**H04W 72/04** (2023.01)

(52) Cooperative Patent Classification (CPC):
**H04W 72/04**

(86) International application number:
**PCT/CN2023/085741**

(87) International publication number:
**WO 2023/186151 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 CN 202210364113**

(71) Applicant: **Spreadtrum Communications
(Shanghai) Co., Ltd.
Shanghai 201203 (CN)**

(72) Inventor: **ZHANG, Meng
Shanghai 201203 (CN)**

(74) Representative: **Mewburn Ellis LLP
Aurora Building
Counterslip
Bristol BS1 6BX (GB)**

(54) **CONFIGURATION METHOD AND APPARATUS**

(57) A configuration method and a configuration device are provided in the disclosure, which are applied to the field of communication technology. The method includes: determining first configuration information, the first configuration information being used for determining at least one of a start position or a size of a guard band corresponding to a subband; and sending the first configuration information to a terminal device. By configuring information of the guard band corresponding to the subband, data interference can be prevented, thereby improving transmission performance.

TERMINAL DEVICE

NETWORK DEVICE

S201, determine first configuration information (for determining at least one of a start position or a size of a guard band corresponding to a subband)

S202, first configuration information

S203, determine at least one of the start position or the size of the guard band according to the first configuration information

FIG. 2

**Description**

TECHNICAL FIELD

This application relates to the field of communication technology, and particularly to a configuration method and a configuration device.

BACKGROUND

Bandwidth is a difference between a highest frequency and a lowest frequency of an analog signal when transmitting the analog signal, that is, a permissible value of a width of a frequency band required to ensure transmission rate and quality of a certain emitted information. In wireless communications, a frequency band in which a signal of a network system is transmitted is referred to as a channel of the network system, and a frequency range of the channel is called a bandwidth of a channel of the signal. There may be interference between different frequency bands, which will affect transmission performance.

SUMMARY

The disclosure provides a configuration method and a configuration device, which is beneficial to preventing data interference by configuring information of a guard band corresponding to a subband, thereby improving transmission performance.

In a first aspect, embodiments of the disclosure provide a configuration method. The configuration method includes: determining first configuration information, the first configuration information being used for determining at least one of a start position or a size of a guard band corresponding to a subband; and sending the first configuration information to a terminal device.

In an optional embodiment, the first configuration information includes an offset of a resource block (RB) occupied by the start position of the guard band relative to a reference RB, and the reference RB is an RB with the smallest index among a plurality of RBs occupied by a component carrier (CC) or a bandwidth part (BWP) to which the guard band belongs.

In an optional embodiment, the guard band is in the subband, and the start position of the guard band is the same as a start position of the subband.

In an optional embodiment, the first configuration information includes the size of the guard band; the method further includes: sending second configuration information to the terminal device, where the second configuration information is used for configuring the start position of the subband.

In an optional embodiment, the size of the guard band is a size corresponding to a subcarrier spacing (SCS) of a BWP to which the guard band belongs.

In an optional embodiment, frequency domain location information of the subband is determined according to at least one of the start position or the size of the guard band.

In an optional embodiment, different guard bands in a BWP to which the guard band belongs have a same size, or different guard bands in a CC to which the guard band belongs have a same size.

In an optional embodiment, if link directions of adjacent subbands are all uplink, a guard band corresponding to the adjacent subbands is used for uplink transmission; if link directions of adjacent subbands are all downlink, a guard band corresponding to the adjacent subbands is used for downlink transmission.

In an optional embodiment, a BWP to which the subband belongs includes a plurality of subbands associated with an uplink direction, and a physical random access channel (PRACH) occasion (RO) resource is configured in one or more of the plurality of subbands associated with the uplink direction; and/or the BWP to which the subband belongs includes a plurality of subbands associated with a downlink direction, and a control resource set (CORESET) is configured in one or more of the plurality of subbands associated with the downlink direction.

In a second aspect, embodiments of the disclosure provide another configuration method. The configuration method includes: receiving first configuration information from a network device, the first configuration information being used for determining at least one of a start position or a size of a guard band corresponding to a subband; and determining at least one of the start position or the size of the guard band according to the first configuration information.

In an optional embodiment, the first configuration information includes an offset of an RB occupied by the start position of the guard band relative to a reference RB, and the reference RB is an RB with the smallest index among a plurality of RBs occupied by a CC or a BWP to which the guard band belongs; determining at least one of the start position or the size of the guard band according to the first configuration information includes: determining the start position of the guard band according to the offset and a start position of the reference RB.

In an optional embodiment, the guard band is in the subband, and the start position of the guard band is the same as a start position of the subband.

In an optional embodiment, the first configuration information includes the size of the guard band; determining at least one of the start position or the size of the guard band according to the first configuration information includes: obtaining the size of the guard band from the first configuration information; and the method further includes: receiving second configuration information from the network device, where the second configuration information is used for configuring the start position of the subband.

In an optional embodiment, the size of the guard band is a size corresponding to an SCS of a BWP to which the guard band belongs.

In an optional embodiment, the method further includes: determining frequency domain location information of the subband according to at least one of the start position or the size of the guard band.

In an optional embodiment, different guard bands in a BWP to which the guard band belongs have a same size, or different guard bands in a CC to which the guard band belongs have a same size.

In an optional embodiment, if link directions of adjacent subbands are all uplink, a guard band corresponding to the adjacent subbands is used for uplink transmission; if link directions of adjacent subbands are all downlink, a guard band corresponding to the adjacent subbands is used for downlink transmission.

In an optional embodiment, the method further includes: determining that a link direction of the subband is a predefined direction, if no configuration information for configuring the link direction of the subband is received.

In an optional embodiment, a BWP to which the subband belongs includes a plurality of subbands associated with an uplink direction, and a PRACH occasion (RO) resource is configured in one or more of the plurality of subbands associated with the uplink direction; and/or the BWP to which the subband belongs includes a plurality of subbands associated with a downlink direction, and a CORESET is configured in one or more of the plurality of subbands associated with the downlink direction.

In a third aspect, embodiments of the disclosure provide a configuration device. The configuration device includes a unit configured to execute the method described in the first aspect or the second aspect.

In a fourth aspect, embodiments of the disclosure provide another configuration device. The configuration device includes a processor. The processor is configured to execute the method described in the first aspect or the second aspect.

In an optional embodiment, the configuration device further includes a memory. The memory is used to store computer programs. The processor is specifically configured to call the computer programs from the memory to execute the method described in the first aspect or the second aspect.

In a fifth aspect, embodiments of the disclosure provide a chip. The chip is configured to execute the method described in the first aspect or the second aspect.

In a sixth aspect, embodiments of the disclosure provide a chip module. The chip module includes a communication interface and a chip. The communication interface is configured for internal communication of the chip module, or for the chip module to communicate with an external device. The chip is configured to execute the method described in the first aspect or the second aspect.

In a seventh aspect, embodiments of the disclosure provide a computer-readable storage medium. The computer-readable storage medium stores computer programs. The computer programs include program instructions which, when executed by a processor, are operable with the processor to execute the method described in the first aspect or the second aspect.

In an eighth aspect, embodiments of the disclosure provide a computer program product. The computer program product includes computer programs or instructions which, when run on a computer, are operable with the computer to execute the method described in the first aspect or the second aspect.

According to embodiments of the disclosure, information of the guard band corresponding to the subband can be configured, which is beneficial to preventing data interference, thereby improving transmission performance.

BRIEF DESCRIPTION OF THE DRAWINGS

FIG. 1 is a schematic diagram illustrating the architecture of a communication system provided in embodiments of the disclosure.
FIG. 2 is a schematic flowchart illustrating a configuration method provided in embodiments of the disclosure.
FIG. 3 is a schematic diagram illustrating a first relationship between guard bands and subbands provided in embodiments of the disclosure.
FIG. 4 is a schematic diagram illustrating a second relationship between guard bands and subbands provided in embodiments of the disclosure.
FIG. 5 is a schematic diagram illustrating whether a guard band can be used for data transmission provided in embodiments of the disclosure.

FIG. 6 is a schematic structural diagram illustrating a configuration device provided in embodiments of the disclosure.

FIG. 7 is a schematic structural diagram illustrating another configuration device provided in embodiments of the disclosure.

FIG. 8 is a schematic structural diagram illustrating another configuration device provided in embodiments of the disclosure.

FIG. 9 is a schematic structural diagram illustrating a chip module provided in embodiments of the disclosure.

DETAILED DESCRIPTION

It should be understood that, the terms "first", "second", and the like involved in embodiments of the disclosure are used to distinguish different objects rather than to describe a particular order. The term "at least one" in embodiments of the disclosure refers to one or more, and the terms "a plurality of" and "multiple" refer to two or more. The term "and/or" in embodiments of the disclosure describes an association relationship of associated objects, and indicates that there can be three relationships. As an example, "A and/or B" can represent the following three situations: A alone, both A and B, or B alone, where A and B each can be in the singular or plural form. The character "/" can indicates that associated objects before and after the character are in an "or" relationship. In addition, the character "/" can also represent a division sign, that is, performing a division operation.

In embodiments of the disclosure, the term "at least one of the following items" or similar expressions refers to any combination of these items, and includes any combination of items each in the singular or plural form. As an example, the term "at least one of a, b, or c" represents the following seven situations: a; b; c; a and b; a and c; b and c; a, b, and c. Each of a, b, and c can be an element or a set containing one or more elements.

In embodiments of the disclosure, the terms "of", "relevant", "corresponding", "associated/related", and "mapped" may sometimes be used interchangeably. It is to be noted that, when distinction between these terms is not emphasized, concepts or meanings to be expressed are consistent.

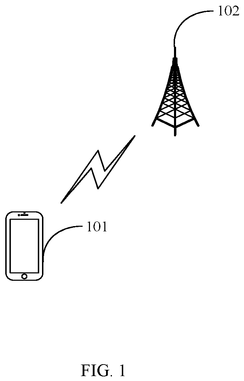

Referring to FIG. 1, FIG. 1 is a schematic diagram illustrating the architecture of a communication system provided in embodiments of the disclosure. The communication system includes, but is not limited to, a terminal device and a network device. The number and form of devices in FIG. 1 are for illustration, which should not constitute any limitation on embodiments of the disclosure. In practice, the communication system may include two or more network devices and two or more terminal devices. The communication system in FIG. 1 includes, for example, a terminal device 101 and a network device 102.

In embodiments of the disclosure, the terminal device is a device with a wireless transceiver function, which can be referred to as a terminal, user equipment (UE), a mobile station (MS), a mobile terminal (MT), access terminal equipment, vehicle-mounted terminal equipment, industrial control terminal equipment, a UE unit, a UE station, a mobile station, a remote station, remote terminal equipment, mobile equipment, UE terminal equipment, wireless communication equipment, a UE agent or UE device, etc. The terminal device may be fixed or mobile. It is to be noted that, the terminal device can support at least one wireless communication technology, such as long time evolution (LTE), new radio (NR), wideband code division multiple access (WCDMA), etc. For example, the terminal device may be a mobile phone, a tablet computer (pad), a desktop computer, a laptop computer, an all-in-one computer, an in-vehicle terminal, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with a wireless communication function, a computing device or other processing device connected to a wireless modem, a wearable device, a terminal device in a future mobile communication network, or a terminal device in a future evolved public land mobile network (PLMN), etc. In some embodiments of the disclosure, the terminal device may also be a device with transceiver functions, such as a chip module. The chip module may include a chip and may further include other discrete devices. The specific technology and specific device form of the terminal device are not limited in embodiments of the disclosure.

In embodiments of the disclosure, the network device is a device that provides a wireless communication function for the terminal device. The network device may be an access network (AN) device, and the AN device may be a radio access network (RAN) device. The AN device can support at least one wireless communication technology, such as LTE, NR, WCDMA, etc. For example, the AN device includes, but is not limited to, a next generation node B (gNB) in the fifth generation (5G) mobile communication system, an evolved node B (eNB), a radio network controller (RNC), a node B (NB), a base station controller (BSC), a base transceiver station (BTS), a home base station (e.g., home evolved node B, or home node B, HNB), a baseband unit (BBU), a TRP, a transmitting point (TP), a mobile switching center, etc. The network device may also be a wireless controller, a centralized unit (CU) and/or a distributed unit (DU) in a cloud radio access network (CRAN) scenario, or the AN device may be a relay station, an access point, a vehicle-mounted device, a terminal device, a wearable device, and an AN device in future mobile communication or an AN device in a future evolved PLMN, etc. In some embodiments, the network device may also be a device that provides a wireless communication function for the terminal device, such as a chip module. For example, the chip module includes a chip, and may further include other discrete devices. The specific technology and specific device form of the network device are not limited in embodiments of the disclosure.

It is to be noted that, technical solutions of embodiments of the disclosure can be applied to various communication systems. For example, a 5G mobile communication system, a 5G NR system. Optionally, the method of embodiments of the disclosure can also be applicable to various future communication systems, such as a sixth generation (6G) system, or other communication networks.

It can be understood that, the communication system described in embodiments of the disclosure is for more clearly illustrating technical solutions of embodiments of the disclosure, and does not constitute a limitation on the technical solutions of the embodiments of the disclosure. Those skilled in the art can know that, with evolution of the system architecture and emergence of new service scenarios, the technical solutions of the embodiments of the disclosure can also be applicable to solving similar technical problems.

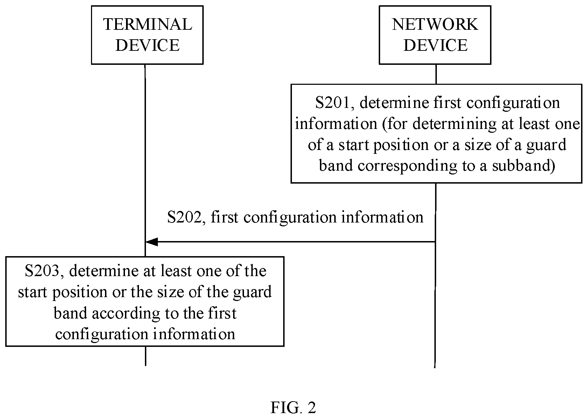

Referring to FIG. 2, FIG. 2 is a schematic flowchart illustrating a configuration method provided in embodiments of the disclosure. As illustrated in FIG. 2, the configuration method includes, but is not limited to, the following operations.

S201, a network device determines first configuration information, where the first configuration information is used for determining at least one of a start position or a size of a guard band corresponding to a subband.

In embodiments of the disclosure, a relationship between guard bands and subbands includes, but is not limited to, the following two types.

A first relationship: there is no overlap between a guard band and a subband.

A second relationship: there is an overlap between a guard band and a subband, for example, the guard band is within the subband.

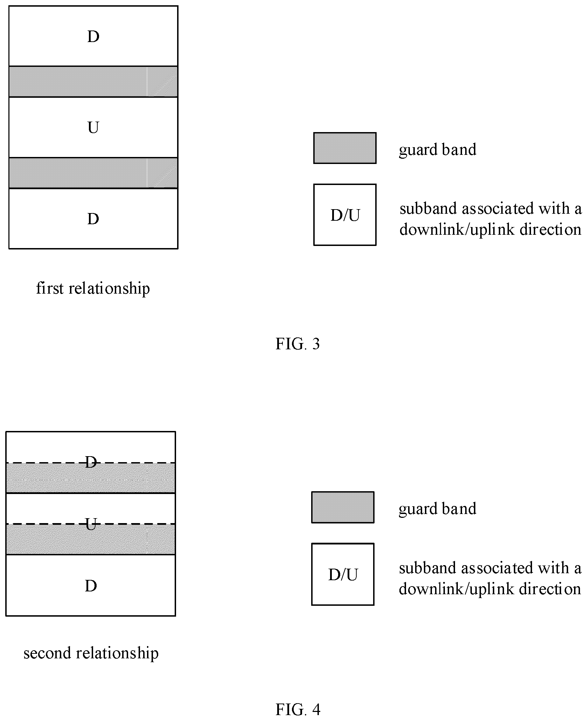

Exemplarily, the first relationship is illustrated in FIG. 3, and the second relationship is illustrated in FIG. 4. In FIG. 3 and FIG. 4, gray filled squares represent guard bands, while white filled squares represent subbands, where the white filled square marked with "D" represents a subband whose link direction is downlink, and the white filled square marked with "U" represents a subband whose link direction is uplink. In embodiments of the disclosure, different D/U configurations can be implemented on different subbands, that is, link directions of different subbands may be the same or different. FIG. 4 exemplarily shows that the guard band is within the subband, and a start position of the guard band is the same as a start position of a subband to which the guard band belongs, that is, a start position of an uplink subband is the same as a start position of a guard band within the uplink subband.

It is to be noted that, link directions of the three subbands in FIG. 3 and FIG. 4 being DUD is for illustration, and the link direction of each subband may be uplink or downlink. Exemplarily, the link directions of the three subbands can also be DDD, UUU, UDU, DUU, etc. It should also be noted that, the two guard bands in FIG. 3 and FIG. 4 having the same size is for illustration, and different guard bands may have the same size or different sizes. For example, the two guard bands in FIG. 3 and FIG. 4 each have a size of 600RB (resource block); or, one of the two guard bands in FIG. 3 and FIG. 4 has a size of 600RB and the other one of the two guard bands in FIG. 3 and FIG. 4 has a size of 700RB. Optionally, different guard bands in a bandwidth part (BWP) to which the guard band belongs have a same size, or different guard bands in a component carrier (CC) to which the guard band belongs have a same size. In this case, the network device requires only one size for one CC or one BWP to configure sizes of all guard bands in one CC or one BWP, which is conducive to saving configuration overhead. Optionally, one CC may be configured with four BWPs, and there may be overlapping among the four BWPs.

Optionally, the three subbands in FIG. 3 and FIG. 4 may be included in one BWP. The number of guard bands = the number of subbands - 1.

In an embodiment, the network device may use a common resource block (CRB) or a reference resource block (RB) as a reference during determining the start position and the size of the guard band, where the reference RB may be an RB with the lowest index in a BWP to which the guard band belongs, or the reference RB may be an RB with the lowest index in a CC to which the guard band belongs. Optionally, at the CC level, the start position and the size for each guard band may be configured with reference to the CRB. Optionally, at the BWP level, the start position and the size for each guard band may be configured at the RB level. Exemplarily, in a case where the BWP to which the guard band belongs occupies multiple RBs and the reference RB is an RB with the smallest index among the multiple RBs, the first configuration information includes an offset of an RB occupied by the start position of the guard band relative to the reference RB. Accordingly, after receiving the first configuration information, the terminal device determines the start position of the guard band according to the offset and a start position of the reference RB.

In 5G, different resources may use different subcarrier spacings (SCS), and the CRB is equivalent to a ruler for locating positions of these resources. CRBs are numbered from a reference point within a system bandwidth, which is called Point A. Point A can be understood as a reference point in the frequency domain. It is to be noted that, point A and the reference RB may be in the same position or in different positions, which is not limitted in embodiments of the disclosure.

In embodiments of the disclosure, the first configuration information may explicitly indicate at least one of the start position or the size of the guard band, for example, the first configuration information carries values of the start position and the size of the guard band. Alternatively, the first configuration information may implicitly indicate at least one of the start position or the size of the guard band.

Exemplarily, in a case where the relationship between guard bands and subbands is as illustrated in FIG. 4 (i.e., a start position of a guard band is the same as a start position of a subband corresponding to the guard band), the network device can indicate a start position of a guard band in a subband by configuring a start position of the subband. In this case, the first configuration information can be information for configuring the start position of the subband. Exemplarily, the first configuration information carries a start position and an end position of a guard band, and a size of the guard band can be implicitly indicated by means of the start position and the end position of the guard band.

S202, the network device sends the first configuration information to a terminal device. Accordingly, the terminal device receives the first configuration information from the network device.

Optionally, the first configuration information may be carried in high-level signaling (e.g., radio resource rontrol, RRC) or system information block type-1 (SIB1), or the first configuration information may be carried in medium access control - control element (MAC-CE) signaling or downlink control information (DCI). Optionally, the network device may also update the start position and the size of the guard band. Exemplarily, the network device updates the start position and the size of the guard band through an RRC message.

S203, the terminal device determines at least one of the start position or the size of the guard band according to the first configuration information.

After receiving the first configuration information, the terminal device determines at least one of the start position or the size of the guard band according to the first configuration information.

In an embodiment, in a case where the relationship between guard bands and subbands is as illustrated in FIG. 4 (i.e., a start position of a guard band is the same as a start position of a subband corresponding to the guard band), a start position of a guard band can be determined by means of a start position of a subband to which the guard band belongs. In this case, the first configuration information can configure only a size of the guard band. Exemplarily, the first configuration information includes a size of a guard band, and the network device sends second configuration information to the terminal device, where the second configuration information is used for configuring a start position of a subband to which the guard band belongs. Accordingly, the terminal device receives the second configuration information, and uses the start position of the subband to which the guard band belongs as a start position of the guard band. In this case, the operations at S203 specifically include: the terminal device obtains the size of the guard band from the first configuration information. As such, after configuring the start position of the subband, only the size of the guard band needs to be configured, which is conducive to saving configuration overhead. The second configuration information may be carried in high-level signaling.

In an embodiment, the size of the guard band is determined according to a SCS of a BWP to which the guard band belongs. Optionally, the SCS has a correspondence relationship with the size of the guard band, in this case, the size of the guard band is a size corresponding to the SCS of the BWP to which the guard band belongs. In other words, after configuring the SCS of the BWP, the network device does not need to explicitly configure the size of the guard band in the BWP. After knowing the SCS of the BWP, the terminal device uses the size corresponding to the SCS of the BWP as the size of the guard band in the BWP. As such, the network device no longer needs to indicate the size of the guard band through the first configuration information, which is conducive to saving configuration overhead. Optionally, the network device can configure the SCS of the BWP through the third configuration information. In this case, the first configuration information indicates only the start position of the guard band.

Exemplarily, the SCS includes 15kHz, 30kHz, and 60kHz for example, the correspondence relationship between the SCS and the size of the guard band is shown in Table 1. Optionally, the correspondence relationship between the SCS and the size of the guard band is defined by a protocol, or indicated by a network device to a terminal device, which is not limited in embodiments of the disclosure.

Table 1 Correspondence relationship between an SCS and a size of a guard band

| SCS (kHz) | Size of Guard Band |
|-----------|--------------------|
| 15        | size 1             |
| 30        | size2              |
| 60        | size3              |

In an embodiment, frequency domain location information of a subband is determined according to at least one of a start position or a size of a guard band corresponding to the subband. In this case, the terminal device can determine the frequency domain location information of the subband according to at least one of the start position or the size of the guard band corresponding to the subband. That is, the frequency domain location information of the subband is inferred by at least one of the start position or the size of the guard band, and thus, there is no need to additionally configure the frequency domain location information of the subband. The frequency domain location information of the subband may include at least one of a start position or an end position, or include at least one of the start position or a size.

Exemplarily, in a case where the relationship between guard bands and subbands is as illustrated in FIG. 3, if the terminal device has determined a start position and a size of a first guard band as well as a start position and a size of a second guard band, the terminal device can determine the start position and an end position of the first guard band as well as the start position and an end position of the second guard band. The start position of the first guard band is an end position of a first subband, and the end position of the first guard band is a start position of a second subband; the start position of the second guard band is an end position of the second subband, and the end position of the second guard band is a start position of a third subband; a start position of the first subband is a start position of the BWP, and an end position of the third subband is an end position of the BWP. The first guard band and the second guard band are respectively the first guard band and the second guard band in a direction from bottom to top in FIG. 3; and the first subband, the second subband, and the third subband are respectively the first subband, the second subband, and the third subband in a direction from bottom to top in FIG. 3.

For example, in a case where the relationship between guard bands and subbands is the first relationship (see FIG. 3), a start position of a subband can be inferred by the following expression (1), and an end position of the subband can be inferred by the following expression (2):

$$RB_s^{start} = \begin{cases} RB_0^{start} & s=0 \\ GB_{s-1}^{start} + GB_{s-1}^{size} & \text{others} \end{cases} \qquad (1)$$

Where $s$ represents an index of a subband; $RB_s^{start}$ represents an index of a frequency domain start RB of a subband with an index of $s$ (i.e., represents a start position of a subband); $RB_0^{start}$ represents an index of a frequency domain start RB of a subband with an index of 0; $GB_{s-1}^{start}$ represents an index of a start RB of a $(s-1)^{th}$ guard band (or represents an index of a start RB of a guard band with an index of $s-1$); $GB_{s-1}^{size}$ represents the number of RBs occupied in frequency domain by the $(s-1)^{th}$ guard band (or represents the number of RBs occupied in frequency domain by the guard band with the index of $s-1$). Expression (1) can be understood as: determining the index of the frequency domain start RB of the subband with the index of $s$ by means of the start RB of the guard band with the index of $s-1$ and the number of RBs occupied in frequency domain by the guard band with the index of $s-1$, where the subband with the index of 0 can be understood as a subband with the smallest index in a BWP or a CC.

$$RB_s^{end} = \begin{cases} RB_{N_{RB-set}-1}^{end} & s = N_{RB-set}-1 \\ GB_s^{start}-1 & \text{others} \end{cases} \qquad (2)$$

Where $RB_s^{end}$ represents an index of a frequency domain end RB of a subband with an index of $s$ (i.e., represents an end position of a subband); $N_{RB-set}$-1 represents the total number of subbands, for example, represents the total number of subbands in a BWP, and the maximum index of the subband is $N_{RB-set}$-1; $RB_{N_{RB-set}-1}^{end}$ represents an index of a frequency domain end RB of a subband with an index of $N_{RB-set}$-1; $GB_s^{start}$ represents an index of a start RB of an $s^{th}$ guard band (or represents an index of a start RB of a guard band with an index of $s$). Expression (2) can be understood as: determining the frequency domain end RB of the subband with the index of $s$ by means of the start RB of the guard band with the index of s.

Exemplarily, in a case where the relationship between guard bands and subbands is as illustrated in FIG. 4, if the terminal device has determined a start position and a size of a first guard band as well as a start position and a size of a second guard band, the terminal device can determine the start position and an end position of the first guard band as well as the start position and an end position of the second guard band. The start position of the first guard band is an end position of a first subband and a start position of a second subband; the start position of the second guard band is an end position of the second subband and a start position of a third subband; a start position of the first subband is a start position of a BWP, and an end position of the third subband is an end position of the BWP.

In an embodiment, if link directions of adjacent subbands are all uplink, a guard band corresponding to the adjacent subbands is used for uplink transmission; if link directions of adjacent subbands are all downlink, a guard band corresponding to the adjacent subbands is used for downlink transmission. In other words, in a case where a guard band is configured by the network, the terminal device can still use the configured guard band for data transmission. Whether the configured guard band is specifically used for uplink data transmission or downlink data transmission can be determined according to link directions of adjacent subbands corresponding to the (configured) guard band: if link directions of two adjacent subbands are the same, a guard band corresponding to the two adjacent subbands can be used for data transmission; and when the guard band can be used for data transmission, a link direction of the guard band is the same as the link directions of the two adjacent subbands. When a guard band is used for data transmission, it can be considered that the guard band does not exist. If link directions of two adjacent subbands are different, a guard band corresponding to the two adjacent subbands still exists, which can prevent interference between frequency bands.

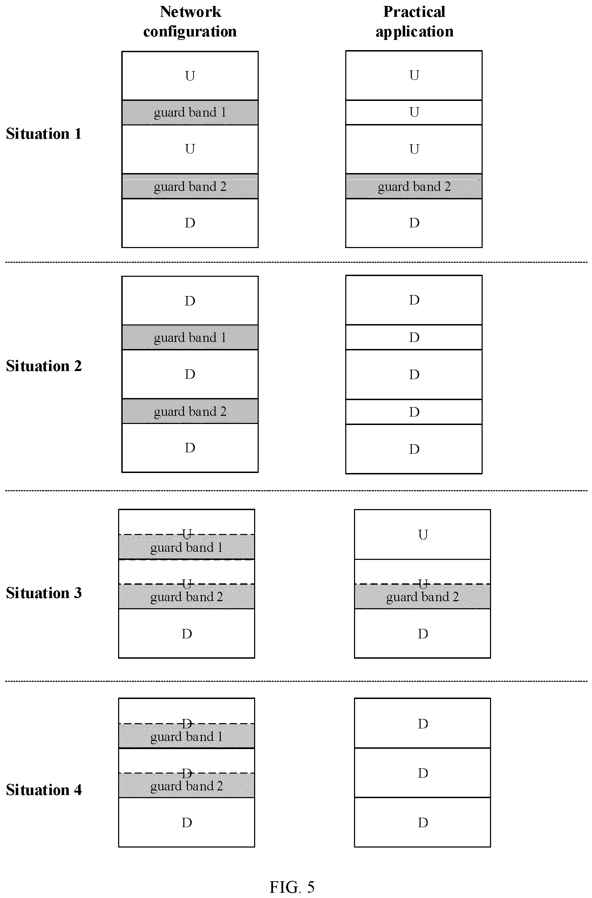

Exemplarily, the four situations in FIG. 5 can be used to illustrate whether a guard band can be used for data transmission. In FIG. 5, the left side shows a relationship between guard bands and subbands configured by the network, while the right side shows an actual relationship between guard bands and subbands. Based on changes from the left side to the back side, whether a guard band can be used for data transmission can be judged intuitively. Specifically, in situation 1, guard band 1 can be used for uplink transmission, while guard band 2 cannot be used for data transmission; in situation 2, both guard band 1 and guard band 2 can be used for downlink transmission; in situation 3, guard band 1 can be used for uplink transmission, while guard band 2 cannot be used for data transmission; in situation 4, both guard band 1 and guard band 2 can be used for downlink transmission.

In an embodiment, if no configuration information for configuring a link direction of a subband is received, the terminal device determines that the link direction of the subband is a predefined direction. The predefined direction may be uplink or downlink. The configuration information for configuring the link direction of the subband may be carried in SIB1 or other high-level signaling. If no subband direction information for a BWP or a CC to which the subband belongs is configured in SIB1 or other high-level signaling, the terminal device can default the link direction of the subband configured by the network device to the predefined direction. Exemplarily, when the subband direction information is default, the terminal device can default link directions of subbands configured by the network device to all be uplink or downlink, or the terminal device can default a specific subband configured by the network device (e.g., a subband with the smallest index or a subband with the largest index) as uplink or downlink, or the terminal device can default link directions of multiple subbands configured by the network device to a preset mode direction. Three subbands are configured by the network device for example, in this case, the preset mode direction may be DDD, UUU, DUD, UDU, etc., as illustrated in FIG. 3 and FIG. 4. In addition, two subbands are configured by the network device for example, in this case, the preset mode direction may be DD, UU, DU or UD, etc.

In an embodiment, a BWP to which the subband belongs includes multiple subbands associated with an uplink direction, in this case, a physical random access channel (PRACH) occasion (RO) resource may be configured in one or more of the multiple subbands associated with the uplink direction. Exemplarily, if a BWP includes multiple subbands associated with an uplink direction, the network device may configure an RO resource on each uplink subband, or configure an RO resource only on one or more uplink subbands. For example, an RO resource is configured in an uplink subband with the smallest index. The uplink subband refers to a subband associated with an uplink direction.

In an embodiment, a BWP to which the subband belongs includes multiple subbands associated with a downlink direction, in this case, a control resource set (CORESET) may be configured in one or more of the multiple subbands associated with the downlink direction. Exemplarily, if a BWP includes multiple subbands associated with a downlink direction, the network device may configure a CORESET on each downlink subband, or configure a CORESET only on one or more downlink subbands. For example, a CORESET is configured in a downlink subband with the smallest index. The downlink subband refers to a subband associated with a downlink direction.

The CORESET is used to configure information such as a frequency domain resource occupied by a physical downlink control channel (PDCCH) in frequency domain and the number of orthogonal frequency division multiplexing (OFDM) symbols occupied in time domain. The CORESET may include multiple physical resource blocks (PRB) in frequency domain and include 1-3 OFDM symbols in time domain.

According to embodiments of the disclosure, the guard band corresponding to the subband can be configured, which is beneficial to preventing data interference, thereby improving transmission performance.

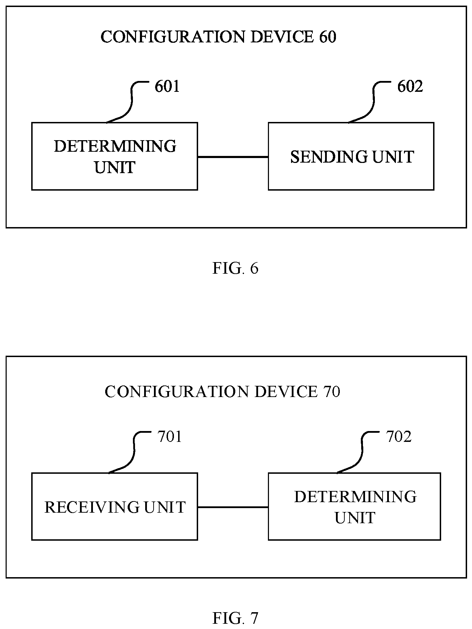

Referring to FIG. 6, FIG. 6 is a schematic structural diagram illustrating a configuration device provided in embodiments of the disclosure. As illustrated in FIG. 6, a configuration device 60 includes a determining unit 601 and a sending unit 602. The configuration device 60 is configured to execute the relevant operations of the network device in the foregoing method embodiments. The determining unit 601 is configured to determine first configuration information, where the first configuration information is used for determining at least one of a start position or a size of a guard band corresponding to a subband. The sending unit 602 is configured to send the first configuration information to a terminal device.

In an optional embodiment, the first configuration information includes an offset of an RB occupied by the start position of the guard band relative to a reference RB, and the reference RB is an RB with the smallest index among multiple RBs occupied by a CC or a BWP to which the guard band belongs.

In an optional embodiment, the guard band is in the subband, and the start position of the guard band is the same as a start position of the subband.

In an optional embodiment, the first configuration information includes the size of the guard band; the sending unit 602 is further configured to send second configuration information to the terminal device, where the second configuration information is used for configuring the start position of the subband.

In an optional embodiment, the size of the guard band is a size corresponding to a SCS of a BWP to which the guard band belongs.

In an optional embodiment, frequency domain location information of the subband is determined according to at least one of the start position or the size of the guard band.

In an optional embodiment, different guard bands in a BWP to which the guard band belongs have a same size, or different guard bands in a CC to which the guard band belongs have a same size.

In an optional embodiment, if link directions of adjacent subbands are all uplink, a guard band corresponding to the adjacent subbands is used for uplink transmission; or if link directions of adjacent subbands are all downlink, a guard band corresponding to the adjacent subbands is used for downlink transmission.

In an optional embodiment, a BWP to which the subband belongs includes multiple subbands associated with an uplink direction, and a PRACH occasion (RO) resource is configured in one or more of the multiple subbands associated with the uplink direction; and/or the BWP to which the subband belongs includes multiple subbands associated with a downlink direction, and a CORESET is configured in one or more of the multiple subbands associated with the downlink direction.

The configuration device 60 can be further configured to implement other functions of the network device in the embodiments corresponding to FIG. 2, which will not be repeated herein. Based on the same inventive concept, the principles of technical problem solving and advantageous effects of the configuration device 60 provided in embodiments of the disclosure are similar to the principles of technical problem solving and advantageous effects of the network device provided in the method embodiments of the disclosure, and thus, reference can be made to the principles and the advantageous effects of implementation of the method, for the sake of concise description, which will not be repeated herein.

Referring to FIG. 7, FIG. 7 is a schematic structural diagram illustrating another configuration device provided in embodiments of the disclosure. As illustrated in FIG. 7, a configuration device 70 includes a receiving unit 701 and a determining unit 702. The receiving unit 701 is configured to receive first configuration information from a network device, where the first configuration information is used for determining at least one of a start position or a size of a guard band corresponding to a subband. The determining unit 702 is configured to determine at least one of the start position or the size of the guard band according to the first configuration information.

In an optional embodiment, the first configuration information includes an offset of an RB occupied by the start position of the guard band relative to a reference RB, and the reference RB is an RB with the smallest index among multiple RBs occupied by a CC or a BWP to which the guard band belongs; the determining unit 702 configured to determine at least one of the start position or the size of the guard band according to the first configuration information is specifically configured to: determine the start position of the guard band according to the offset and a start position of the reference RB.

In an optional embodiment, the guard band is in the subband, and the start position of the guard band is the same as a start position of the subband.

In an optional embodiment, the first configuration information includes the size of the guard band; the determining unit 702 configured to determine at least one of the start position or the size of the guard band according to the first configuration information is specifically configured to: obtain the size of the guard band from the first configuration information; the receiving unit 701 is further configured to receive second configuration information from the network device, where the second configuration information is used for configuring the start position of the subband.

In an optional embodiment, the size of the guard band is a size corresponding to a SCS of a BWP to which the guard band belongs.

In an optional embodiment, the determining unit 702 is further configured to determine frequency domain location information of the subband according to at least one of the start position or the size of the guard band.

In an optional embodiment, different guard bands in a BWP to which the guard band belongs have a same size, or different guard bands in a CC to which the guard band belongs have a same size.

In an optional embodiment, if link directions of adjacent subbands are all uplink, a guard band corresponding to the adjacent subbands is used for uplink transmission; or if link directions of adjacent subbands are all downlink, a guard band corresponding to the adjacent subbands is used for downlink transmission.

In an optional embodiment, the determining unit 702 is further configured to determine that a link direction of the subband is a predefined direction, if no configuration information for configuring the link direction of the subband is received.

In an optional embodiment, a BWP to which the subband belongs includes multiple subbands associated with an uplink direction, and a PRACH occasion (RO) resource is configured in one or more of the multiple subbands associated with the uplink direction; and/or the BWP to which the subband belongs includes multiple subbands associated with a downlink direction, and a CORESET is configured in one or more of the multiple subbands associated with the downlink direction.

The configuration device 70 can be further configured to implement the functions of the terminal device in the embodiments corresponding to FIG. 2, which will not be repeated herein. Based on the same inventive concept, the principles of technical problem solving and advantageous effects of the configuration device 70 provided in embodiments of the disclosure are similar to the principles of technical problem solving and advantageous effects of the terminal device in the method embodiments of the disclosure, and thus, reference can be made to the principles and the advantageous effects of implementation of the method, for the sake of concise description, which will not be repeated herein.

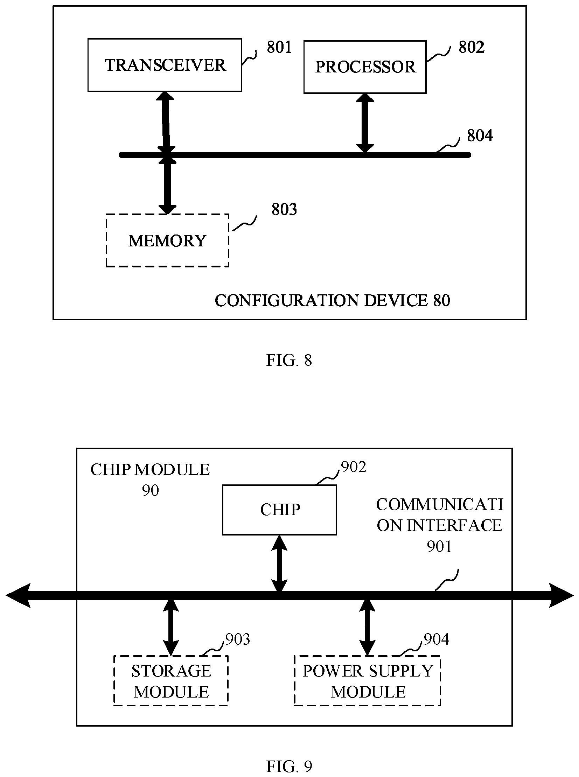

Referring to FIG. 8, FIG. 8 illustrates another configuration device 80 provided in embodiments of the disclosure. The configuration device 80 can be configured to implement the functions of the network device in the foregoing method embodiments, or to implement the functions of the terminal device in the foregoing method embodiments. The configuration device 80 includes a transceiver 801 and a processor 802. Optionally, the configuration device further includes a memory 803. The transceiver 801, the processor 802, and the memory 803 are connected to each other via a bus 804 or by other methods. The bus is represented by a thick line in FIG. 8. The connection between other components is merely illustrative and is not limited herein. The bus may include an address bus, a data bus, a control bus, etc. For ease of representation, only one thick line is used in FIG. 8, but it does not mean that there is only one bus or one type of bus.

The coupling of embodiments of the disclosure may be indirect coupling or communication connection between devices, units, or modules, may be in the form of electrical, mechanical, etc., and is used for information exchange between devices, units, or modules. The specific connection medium between the transceiver 801, the processor 802, and the memory 803 is not limited in embodiments of the disclosure.

The memory 803 may include a read-only memory (ROM) and a random access memory (RAM), and can provide instructions and data for the processor 802. A portion of the memory 803 may also include a non-transitory RAM.

The processor 802 may be a central processing unit (CPU), or other general-purpose processors, digital signal processors (DSP), application-specific integrated circuits (ASIC), field-programmable gate arrays (FPGA) or other programmable logic devices, discrete gate or transistor logic devices, discrete hardware components, etc. The general-purpose processor may be a microprocessor. Optionally, the processor 802 may also be any conventional processor, etc.

In an example, when the network device is in a form illustrated in FIG. 8, the processor in FIG. 8 can be configured to execute the method executed by the network device in any of the foregoing method embodiments.

In an example, when the terminal device is in a form illustrated in FIG. 8, the processor in FIG. 8 can be configured to execute the method executed by the terminal device in any of the foregoing method embodiments.

In an optional embodiment, the memory 803 is used to store program instructions; the processor 802 is configured to call the program instructions stored in the memory 803 to execute the operations executed by the network device and the operations executed by the terminal device in the embodiments corresponding to FIG. 2. Specifically, the function/implementation process of the receiving unit, the sending unit, and the determining unit in FIG. 6 and FIG. 7 can be implemented by calling, by the processor 802 in FIG. 8, the computer execution instructions stored in the memory 803. Alternatively, the function/implementation process of the determining unit in FIG. 6 and FIG. 7 can be implemented by calling, by the processor 802 in FIG. 8, the computer execution instructions stored in the memory 803, the function/implementation process of the sending unit in FIG. 6 can be implemented by means of the transceiver 801 in FIG. 8, and the function/implementation process of the receiving unit in FIG. 7 can be implemented by means of the transceiver 801 in FIG. 8.

In embodiments of the disclosure, the method provided in embodiments of the disclosure can be implemented by running computer programs (including program codes) capable of executing each operation involved in the above method on a general computing device (e.g., a computer) including a processing element and a storage element (e.g., a CPU, a RAM, and a ROM). The computer programs can be recorded on, for example, a computer-readable recording medium, and are loaded into the above computing device through the computer-readable recording medium and run therein.

Based on the same inventive concept, the principles of technical problem solving and advantageous effects of the configuration device 80 provided in embodiments of the disclosure are similar to the principles of technical problem solving and advantageous effects of the terminal device and the network device in the method embodiments of the disclosure, and thus, reference can be made to the principles and advantageous effects of implementation of the method, for the sake of concise description, which will not be repeated herein.

The configuration device (e.g., the configuration device 60, the configuration device 70, the configuration device 80) may be, for example, a chip or a chip module.

The disclosure further provides a chip. The chip can be configured to execute the relevant operations of the network device and the terminal device in the foregoing method embodiments.

In a case where the chip is configured to implement the functions of the network device in the foregoing embodiments, the chip is configured to: determine first configuration information, where the first configuration information is used for determining at least one of a start position or a size of a guard band corresponding to a subband; and send the first configuration information to a terminal device.

In an optional embodiment, the first configuration information includes an offset of an RB occupied by the start position of the guard band relative to a reference RB, and the reference RB is an RB with the smallest index among multiple RBs occupied by a CC or a BWP to which the guard band belongs.

In an optional embodiment, the guard band is in the subband, and the start position of the guard band is the same as a start position of the subband.

In an optional embodiment, the first configuration information includes the size of the guard band; the chip is further configured to send second configuration information to the terminal device, where the second configuration information is used for configuring the start position of the subband.

In an optional embodiment, the size of the guard band is a size corresponding to a SCS of a BWP to which the guard band belongs.

In an optional embodiment, frequency domain location information of the subband is determined according to at least one of the start position or the size of the guard band.

In an optional embodiment, different guard bands in a BWP to which the guard band belongs have a same size, or different guard bands in a CC to which the guard band belongs have a same size.

In an optional embodiment, if link directions of adjacent subbands are all uplink, a guard band corresponding to the adjacent subbands is used for uplink transmission; or if link directions of adjacent subbands are all downlink, a guard band corresponding to the adjacent subbands is used for downlink transmission.

In an optional embodiment, a BWP to which the subband belongs includes multiple subbands associated with an uplink direction, and a PRACH occasion (RO) resource is configured in one or more of the multiple subbands associated with the uplink direction; and/or the BWP to which the subband belongs includes multiple subbands associated with a downlink direction, and a CORESET is configured in one or more of the multiple subbands associated with the downlink direction.

Specifically, in this case, for details of the operations performed by the chip, reference can be made to the introduction of the network device in the foregoing embodiments corresponding to FIG. 2.

In a case where the chip is configured to implement the functions of the terminal device in the foregoing embodiments, the chip is configured to: receive first configuration information from a network device, where the first configuration information is used for determining at least one of a start position or a size of a guard band corresponding to a subband; and determine at least one of the start position or the size of the guard band according to the first configuration information.

In an optional embodiment, the first configuration information includes an offset of an RB occupied by the start position of the guard band relative to a reference RB, and the reference RB is an RB with the smallest index among multiple RBs occupied by a CC or a BWP to which the guard band belongs; the chip configured to determine at least one of the start position or the size of the guard band according to the first configuration information is specifically configured to: determine the start position of the guard band according to the offset and a start position of the reference RB.

In an optional embodiment, the guard band is in the subband, and the start position of the guard band is the same as a start position of the subband.

In an optional embodiment, the first configuration information includes the size of the guard band; the chip configured to determine at least one of the start position or the size of the guard band according to the first configuration information is specifically configured to: obtain the size of the guard band from the first configuration information; the chip is further configured to receive second configuration information from the network device, where the second configuration information is used for configuring the start position of the subband.

In an optional embodiment, the size of the guard band is a size corresponding to a SCS of a BWP to which the guard band belongs.

In an optional embodiment, the chip is further configured to determine frequency domain location information of the subband according to at least one of the start position or the size of the guard band.

In an optional embodiment, different guard bands in a BWP to which the guard band belongs have a same size, or different guard bands in a CC to which the guard band belongs have a same size.

In an optional embodiment, if link directions of adjacent subbands are all uplink, a guard band corresponding to the adjacent subbands is used for uplink transmission; or if link directions of adjacent subbands are all downlink, a guard band corresponding to the adjacent subbands is used for downlink transmission.

In an optional embodiment, the chip is further configured to determine that a link direction of the subband is a predefined direction, if no configuration information for configuring the link direction of the subband is received.

In an optional embodiment, a BWP to which the subband belongs includes multiple subbands associated with an uplink direction, and a PRACH occasion (RO) resource is configured in one or more of the multiple subbands associated with the uplink direction; and/or the BWP to which the subband belongs includes multiple subbands associated with a downlink direction, and a CORESET is configured in one or more of the multiple subbands associated with the downlink direction.

Specifically, in this case, for details of the operations performed by the chip, reference can be made to the introduction of the terminal device in the foregoing embodiments corresponding to FIG. 2.

In a possible embodiment, the chip includes at least one processor, at least one first memory, and at least one second memory. The at least one first memory and the at least one processor are interconnected via a line, and the at least one first memory stores instructions; the at least one second memory and the at least one processor are interconnected via a line, and the at least one second memory stores data that needs to be stored in the foregoing method embodiments.

For each device or product applied to or integrated in the chip, each module contained therein may be implemented in the form of hardware such as circuits; alternatively, at least some modules contained therein may be implemented in the form of software programs that run on a processor integrated inside the chip, and the remaining modules (if any) may be implemented in the form of hardware such as circuits.

Based on the same inventive concept, the principles of technical problem solving and advantageous effects of the chip provided in the embodiments of the disclosure are similar to the principles of technical problem solving and advantageous effects of the terminal device and the network device in the method embodiments of the disclosure, and thus, reference can be made to the principles and advantageous effects of implementation of the method, for the sake of concise description, which will not be repeated herein.

Referring to FIG. 9, FIG. 9 is a schematic structural diagram illustrating a chip module provided in embodiments of the disclosure. A chip module 90 can be configured to execute the relevant operations of the network device and the terminal device in the foregoing method embodiments. The chip module 90 includes a communication interface 901 and a chip 902.

The communication interface is used for internal communication of the chip module, or for the chip module to communicate with an external device. The chip is configured to implement the functions of the network device and the functions of the terminal device in the embodiments of the disclosure, and reference may be made to the corresponding embodiments of FIG. 2 for details. Optionally, the chip module 90 may further include a storage module 903 and a power supply module 904. The storage module 903 is used to store data and instructions. The power supply module 904 is used to provide power for the chip module.

For each device or product applied to or integrated in the chip module, each module contained therein may be implemented by hardware such as circuits, and different modules may be located in the same component of the chip module (e.g., a chip, a circuit module) or located in different components of the chip module; alternatively, at least some modules contained therein may be implemented by software programs that run on a processor integrated inside the chip module, and the remaining modules (if any) may be implemented by hardware such as circuits.

Embodiments of the disclosure further provide a computer-readable storage medium. The computer-readable storage medium stores one or more instructions which are suitable for being loaded by a processor and are operable to execute the method provided in the foregoing method embodiments.

Embodiments of the disclosure further provide a computer program product. The computer program product includes computer programs or instructions which, when run on a computer, are operable with the computer to execute the method provided in the foregoing method embodiments.

Embodiments of the disclosure further provide a configuration system. The configuration system includes the network device and the terminal device in the embodiments corresponding to FIG. 2.

The modules/units contained in each device and product described in the foregoing embodiments may be software modules/units or hardware modules/units, or may be partially software modules/units and partially hardware modules/units. For example, for each device and product applied to or integrated in a chip, the modules/units contained therein may all be implemented in the form of hardware such as circuits, or at least some of the modules/units contained therein may be implemented in the form of software programs that run on a processor integrated inside the chip, and the remaining modules/units (if any) may be implemented in the form of hardware such as circuits; for each device and product applied to or integrated in a chip module, the modules/units contained therein may all be implemented in the form of hardware such as circuits, and different modules/units may be located in the same component (e.g., a chip, a circuit module) of the chip module or located in different components of the chip module, or at least some of the modules/units contained therein may be implemented in the form of software programs that run on a processor integrated inside the chip module, and the remaining modules/units (if any) may be implemented in the form of hardware such as circuits; for each device and product applied to or integrated in a terminal, the modules/units contained therein may all be implemented in the form of hardware such as circuits, and different modules/units may be located in the same component (e.g., a chip, a circuit module) of the terminal or located in different components of the terminal, or at least some of the modules/units contained therein may be implemented in the form of software programs that run on a processor integrated inside the terminal, and the remaining modules/units (if any) may be implemented in the form of hardware such as circuits.

It is to be noted that, for the sake of simplicity, the foregoing method embodiments are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the embodiments described in the specification are exemplary embodiments, and the actions and modules involved are not necessarily essential to the disclosure.

The operations of the method of embodiments of the disclosure may be adjusted in terms of execution order, may be combined, or may be deleted according to actual needs.

The modules of the device of embodiments of the disclosure may be merged, divided, or deleted according to actual needs.

Those skilled in the art can understand that, all or part of the operations of the method of the above embodiments may be completed by instructing the relevant hardware through a program. The program may be stored in a computer-readable storage medium, and the readable storage medium may include a flash drive, a ROM, a RAM, a disk or an optical disk, etc.

The above only discloses exemplary embodiments of the disclosure, which is only part of embodiments of the disclosure, and should not constitute a limitation on the protection scope of the disclosure.

**Claims**

1. A configuration method, comprising:

   determining first configuration information, the first configuration information being used for determining at least one of a start position or a size of a guard band corresponding to a subband; and
   sending the first configuration information to a terminal device.

2. The configuration method of claim 1, wherein the first configuration information comprises an offset of a resource block, RB, occupied by the start position of the guard band relative to a reference RB, and the reference RB is an RB with the smallest index among a plurality of RBs occupied by a component carrier, CC, or a bandwidth part, BWP, to which the guard band belongs.

3. The configuration method of claim 1 or 2, wherein the guard band is in the subband, and the start position of the guard band is the same as a start position of the subband.

4. The configuration method of claim 3, wherein the first configuration information comprises the size of the guard band, and the method further comprises:
   sending second configuration information to the terminal device, wherein the second configuration information is used for configuring the start position of the subband.

5. The configuration method of any of claims 1 to 3, wherein the size of the guard band is a size corresponding to a subcarrier spacing, SCS, of a bandwidth part, BWP, to which the guard band belongs.

6. The configuration method of any of claims 1 to 3, wherein frequency domain location information of the subband is determined according to at least one of the start position or the size of the guard band.

7. The configuration method of any of claims 1 to 6, wherein different guard bands in a bandwidth part, BWP, to which the guard band belongs have a same size, or different guard bands in a component carrier, CC, to which the guard band belongs have a same size.

8. The configuration method of any of claims 1 to 7, wherein

   if link directions of adjacent subbands are all uplink, a guard band corresponding to the adjacent subbands is used for uplink transmission; or
   if link directions of adjacent subbands are all downlink, a guard band corresponding to the adjacent subbands is used for downlink transmission.

9. The configuration method of any of claims 1 to 8, wherein

   a bandwidth part, BWP, to which the subband belongs comprises a plurality of subbands associated with an uplink direction, and a physical random access channel, PRACH, occasion, RO, resource is configured in one or more of the plurality of subbands associated with the uplink direction; and/or
   the BWP to which the subband belongs comprises a plurality of subbands associated with a downlink direction, and a control resource set, CORESET, is configured in one or more of the plurality of subbands associated with the downlink direction.

10. A configuration method, comprising:

receiving first configuration information from a network device, the first configuration information being used for determining at least one of a start position or a size of a guard band corresponding to a subband; and determining at least one of the start position or the size of the guard band according to the first configuration information.

11. The configuration method of claim 10, wherein

the first configuration information comprises an offset of a resource block, RB, occupied by the start position of the guard band relative to a reference RB, and the reference RB is an RB with the smallest index among a plurality of RBs occupied by a component carrier, CC, or a bandwidth part, BWP, to which the guard band belongs; and determining at least one of the start position or the size of the guard band according to the first configuration information comprises:
determining the start position of the guard band according to the offset and a start position of the reference RB.

12. The configuration method of claim 10 or 11, wherein the guard band is in the subband, and the start position of the guard band is the same as a start position of the subband.

13. The configuration method of claim 12, wherein

the first configuration information comprises the size of the guard band;
determining at least one of the start position or the size of the guard band according to the first configuration information comprises:
obtaining the size of the guard band from the first configuration information; and the method further comprises:
receiving second configuration information from the network device, wherein the second configuration information is used for configuring the start position of the subband.

14. The configuration method of any of claims 10 to 12, wherein the size of the guard band is a size corresponding to a subcarrier spacing, SCS, of a bandwidth part, BWP, to which the guard band belongs.

15. The configuration method of any of claims 10 to 12, further comprising:
determining frequency domain location information of the subband according to at least one of the start position or the size of the guard band.

16. The configuration method of any of claims 10 to 15, wherein different guard bands in a bandwidth part, BWP, to which the guard band belongs have a same size, or different guard bands in a component carrier, CC, to which the guard band belongs have a same size.

17. The configuration method of any of claims 10 to 16, wherein

if link directions of adjacent subbands are all uplink, a guard band corresponding to the adjacent subbands is used for uplink transmission; or
if link directions of adjacent subbands are all downlink, a guard band corresponding to the adjacent subbands is used for downlink transmission.

18. The configuration method of any of claims 10 to 17, further comprising:
determining that a link direction of the subband is a predefined direction, if no configuration information for configuring the link direction of the subband is received.

19. The configuration method of any of claims 10 to 18, wherein

a bandwidth part, BWP, to which the subband belongs comprises a plurality of subbands associated with an uplink direction, and a physical random access channel, PRACH, occasion, RO, resource is configured in one or more of the plurality of subbands associated with the uplink direction; and/or

the BWP to which the subband belongs comprises a plurality of subbands associated with a downlink direction, and a control resource set, CORESET, is configured in one or more of the plurality of subbands associated with the downlink direction.

20. A configuration device, comprising:

a determining unit, configured to determine first configuration information, the first configuration information being used for determining at least one of a start position or a size of a guard band corresponding to a subband; and
a sending unit, configured to send the first configuration information to a terminal device.

21. A configuration device, comprising:

a receiving unit, configured to receive first configuration information from a network device, the first configuration information being used for determining at least one of a start position or a size of a guard band corresponding to a subband; and
a determining unit, configured to determine at least one of the start position or the size of the guard band according to the first configuration information.

22. A configuration device, comprising a processor configured to execute the configuration method of any of claims 1 to 19.

23. A chip being configured to:

determine first configuration information, the first configuration information being used for determining at least one of a start position or a size of a guard band corresponding to a subband; and
send the first configuration information to a terminal device.

24. A chip being configured to:

receive first configuration information from a network device, the first configuration information being used for determining at least one of a start position or a size of a guard band corresponding to a subband; and
determine at least one of the start position or the size of the guard band according to the first configuration information.

25. A chip module, comprising a communication interface and a chip, wherein

the communication interface is configured for internal communication of the chip module, or for the chip module to communicate with an external device; and
the chip is configured to:

determine first configuration information, the first configuration information being used for determining at least one of a start position or a size of a guard band corresponding to a subband; and
send the first configuration information to a terminal device.

26. A chip module, comprising a communication interface and a chip, wherein

the communication interface is configured for internal communication of the chip module, or for the chip module to communicate with an external device; and
the chip is configured to:

receive first configuration information from a network device, the first configuration information being used for determining at least one of a start position or a size of a guard band corresponding to a subband; and
determine at least one of the start position or the size of the guard band according to the first configuration information.

FIG. 1

TERMINAL
DEVICE

NETWORK
DEVICE

S201, determine first configuration
information (for determining at least one
of a start position or a size of a guard
band corresponding to a subband)

S202, first configuration information

S203, determine at least one of the
start position or the size of the guard
band according to the first
configuration information

FIG. 2

D

U

D

first relationship

guard band

D/U  subband associated with a downlink/uplink direction

FIG. 3

D

U

D

second relationship

guard band

D/U  subband associated with a downlink/uplink direction

FIG. 4

|  | Network configuration | Practical application |
|---|---|---|

**Situation 1**

| U |
|---|
| guard band 1 |
| U |
| guard band 2 |
| D |

| U |
|---|
| U |
| U |
| guard band 2 |
| D |

**Situation 2**

| D |
|---|
| guard band 1 |
| D |
| guard band 2 |
| D |

| D |
|---|
| D |
| D |
| D |
| D |

**Situation 3**

| U |
|---|
| guard band 1 |
| U |
| guard band 2 |
| D |

| U |
|---|
| U |
| guard band 2 |
| D |

**Situation 4**

| D |
|---|
| guard band 1 |
| D |
| guard band 2 |
| D |

| D |
|---|
| D |
| D |

FIG. 5

CONFIGURATION DEVICE 60

601

602

DETERMINING
UNIT

SENDING UNIT

FIG. 6

CONFIGURATION DEVICE 70

701

702

RECEIVING UNIT

DETERMINING
UNIT

FIG. 7

TRANSCEIVER 801    PROCESSOR 802

804

MEMORY 803

CONFIGURATION DEVICE 80

FIG. 8

CHIP MODULE 90

CHIP 902

COMMUNICATI ON INTERFACE 901

STORAGE MODULE 903    POWER SUPPLY MODULE 904

FIG. 9

| INTERNATIONAL SEARCH REPORT | International application No. |
|---|---|
| | **PCT/CN2023/085741** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXTC, 3GPP, CNKI, IEEE: 保护带, guard band, 配置, configur+, 载波, carrier, 子带, 子频带, sub-band, 起始, 初始, 开始, starting, 位置, position, 大小, 尺寸, size, BWP

**C. DOCUMENTS CONSIDERED TO BE RELEVANT**

| Category* | Citation of document, with indication, where appropriate, of the relevant passages | Relevant to claim No. |
|---|---|---|
| X | CN 113261366 A (ELECTRONICS AND TELECOMMUNICATIONS RESEARCH INSTITUTE) 13 August 2021 (2021-08-13)<br>  description, paragraphs 60-233 | 1-26 |
| X | CN 112583546 A (VIVO COMMUNICATION TECHNOLOGY CO., LTD.) 30 March 2021 (2021-03-30)<br>  description, paragraphs 63-300 | 1-26 |
| A | CN 114009117 A (GUANGDONG OPPO MOBILE COMMUNICATIONS CO., LTD.) 01 February 2022 (2022-02-01)<br>  entire document | 1-26 |
| A | WO 2020165487 A1 (NOKIA TECHNOLOGIES OY) 20 August 2020 (2020-08-20)<br>  entire document | 1-26 |
| A | LG ELECTRONICS. "Remaining issues of channel access procedure and configured grant for NR-U"<br>*3GPP TSG RAN WG1 #103-e, R1-2008043*, 13 November 2020 (2020-11-13),<br>  entire document | 1-26 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **06 May 2023** | **11 May 2023** |

| Name and mailing address of the ISA/CN | Authorized officer |
|---|---|
| China National Intellectual Property Administration (ISA/CN)<br>China No. 6, Xitucheng Road, Jimenqiao, Haidian District, Beijing 100088 | |
| | Telephone No. |

Form PCT/ISA/210 (second sheet) (July 2022)

| INTERNATIONAL SEARCH REPORT | | | | | | | International application No. |
|---|---|---|---|---|---|---|---|
| Information on patent family members | | | | | | | **PCT/CN2023/085741** |

| Patent document cited in search report | | | Publication date (day/month/year) | Patent family member(s) | | | Publication date (day/month/year) |
|---|---|---|---|---|---|---|---|
| CN | 113261366 | A | 13 August 2021 | WO | 2020171478 | A1 | 27 August 2020 |
| | | | | US | 2022061094 | A1 | 24 February 2022 |
| | | | | KR | 20200102926 | A | 01 September 2020 |
| CN | 112583546 | A | 30 March 2021 | WO | 2021057812 | A1 | 01 April 2021 |
| | | | | KR | 20220065067 | A | 19 May 2022 |
| | | | | BR | 112022005742 | A2 | 21 June 2022 |
| | | | | US | 2022217778 | A1 | 07 July 2022 |
| | | | | VN | 88048 | A | 25 July 2022 |
| | | | | EP | 4044484 | A1 | 17 August 2022 |
| | | | | IN | 202227023997 | A | 02 September 2022 |
| | | | | HK | 40070128 | A0 | 21 October 2022 |
| | | | | JP | 2022549899 | A | 29 November 2022 |
| CN | 114009117 | A | 01 February 2022 | WO | 2021088049 | A1 | 14 May 2021 |
| | | | | CN | 114531733 | A | 24 May 2022 |
| | | | | KR | 20220097908 | A | 08 July 2022 |
| | | | | VN | 88233 | A | 25 July 2022 |
| | | | | IN | 202217026797 | A | 12 August 2022 |
| | | | | EP | 4044721 | A1 | 17 August 2022 |
| | | | | US | 2022264647 | A1 | 18 August 2022 |
| | | | | JP | 2023506134 | A | 15 February 2023 |
| WO | 2020165487 | A1 | 20 August 2020 | IN | 202147040869 | A | 17 September 2021 |
| | | | | CN | 113678534 | A | 19 November 2021 |
| | | | | EP | 3925345 | A1 | 22 December 2021 |
| | | | | VN | 83409 | A | 25 January 2022 |
| | | | | JP | 2022520644 | A | 31 March 2022 |
| | | | | US | 2022150008 | A1 | 12 May 2022 |
| | | | | HK | 40063714 | A0 | 24 June 2022 |